# EUROPÄISCHE PATENTSCHRIFT

(11) **EP 1 731 673 B1**
(45) Veröffentlichungstag und Bekanntmachung des Hinweises auf die Patenterteilung: **12.03.2008**
(21) Anmeldenummer: 05104174.7
(22) Anmeldetag: 18.05.2005
(51) Int. Cl.: E01B 29/46

(54) **Schweissmaschine und Verfahren zum Verschweissen von Schienen eines Gleises**
Welding apparatus and welding method for railway track rails
Machine pour souder et méthode de soudage pour rails d'une voie ferrée

(43) Veröffentlichungstag der Anmeldung: 13.12.2006
(73) Patentinhaber: Franz Plasser Bahnbaumaschinen-Industriegesellschaft m.b.H., 1010 Wien (AT)
(72) Erfinder: Theurer, Josef, 1010 Wien (AT); Lichtberger, Bernhard, 4230 Pregarten (AT)

(56) Entgegenhaltungen:
- EP-A- 0 326 794
- US-A- 5 136 140

## Beschreibung

Die Erfindung betrifft eine Schweißmaschine gemäß den im Oberbegriff des Anspruches 1 angeführten Merkmalen.

Eine derartige Schweißmaschine ist durch US 5 136 140, EP 0 326 794 oder US 4 929 816 bekannt und dient zum Verschweißen von Schienen eines Gleises. Der Schweißvorgang wird durch eine Schienenziehvorrichtung unterstützt, die die eingespannten Schienenenden mit großer Kraft auf einen für das Schweißen erforderlichen Abstand zueinander zieht. Die Schienenziehvorrichtung ist pendelnd am Maschinenrahmen aufgehängt und für den Arbeitseinsatz zur Absenkung auf die Schienen höhenverstellbar. Um die Schienen erfassen zu können, müssen diese erst mühsam durch Eintreiben von Keilen zwischen Schienenfuß und Unterlagsplatte von diesen abgehoben werden.

Die Aufgabe der vorliegenden Erfindung liegt nun in der Schaffung einer Maschine der eingangs genannten Art, mit der das Erfassen der Schienen durch die Schienenziehvorrichtung vereinfacht ist.

Diese Aufgabe der Erfindung wird mit einer Maschine der gattungsgemäßen Art durch die im Kennzeichen des Hauptanspruches angeführten Merkmale gelöst.

Mit diesen Hilfszangen ist unter lediglich geringem konstruktiven Mehraufwand eine rasche Erfassung und Anhebung der miteinander zu verschweißenden Schienenenden möglich. Da die Schienenziehvorrichtung ohnehin über den Schienen zentriert werden muss, sind damit die auf der Schienenziehvorrichtung befestigten Zangen in vorteilhafter Weise automatisch in bezug auf die zu erfassenden Schienen zentriert. Dadurch ist eine sehr rasche, präzise und automatisierbare Schienenerfassung gewährleistet. Außerdem ist die nachfolgend erforderliche Erfassung der Schienen durch eine in die Schienenziehvorrichtung integrierte Zentriervorrichtung völlig problemlos und automatisch durchführbar.

Eine weitere Aufgabe der vorliegenden Erfindung liegt auch in der Schaffung eines Verfahrens der im Oberbegriff von Anspruch 5 beschriebenen Art, bei dem die Erfassung der miteinander zu verschweißenden Schienen durch die Schienenziehvorrichtung erleichtert wird.

Diese weitere Aufgabe der Erfindung wird durch die im Kennzeichen von Anspruch 5 angeführten Merkmale gelöst.

Weitere Vorteile der Erfindung ergeben sich aus der Zeichnungsbeschreibung. Im folgenden wird die Erfindung anhand eines in der Zeichnung dargestellten Ausführungsbeispieles näher beschrieben. Es zeigen:
Fig. 1 eine Seitenansicht einer Schweißmaschine mit einer Schienenziehvorrichtung,
Fig. 2 eine vergrößerte Draufsicht auf die Schienenziehvorrichtung,
Fig. 3, 4 eine teilweise Seitenansicht bzw. eine in Schienenlängsrichtung verlaufende Ansicht der Schienenziehvorrichtung.

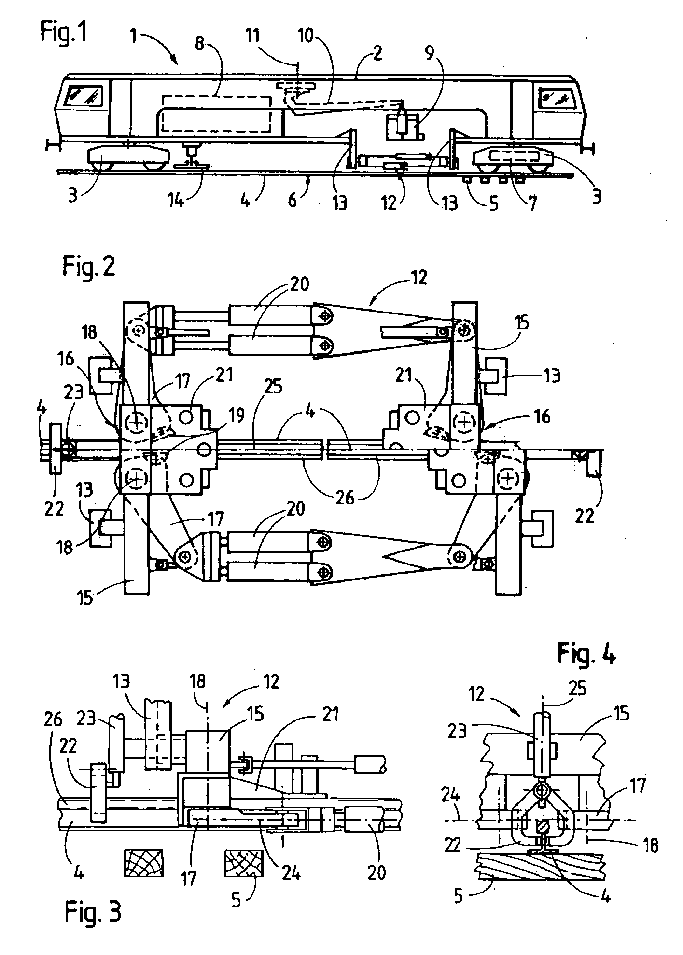

Eine in Fig. 1 dargestellte Schweißmaschine 1 mit einem brückenförmigen Maschinenrahmen 2 ist durch endseitig angeordnete Schienenfahrwerke 3 auf einem Schienen 4 und Schwellen 5 aufweisenden Gleis 6 mit Hilfe eines Fahrantriebes 7 verfahrbar. Eine zentrale Energieeinheit 8 mit einem Antriebsmotor, Hydraulikpumpen und einem Generator sorgt für die erforderliche Energielieferung. Mittig zwischen den beiden Fahrwerken 3 ist ein elektrisches Abbrennstumpf-Schweißaggregat 9 angeordnet, das mit einem teleskopisch verlänger- und höhenverstellbaren Hubarm 10 verbunden ist, der seinerseits am Maschinenrahmen 2 befestigt und um eine vertikale Achse 11 verdrehbar ist. Unterhalb des Abbrennstumpf-Schweißaggregates 9 ist eine Schienenziehvorrichtung 12 angeordnet, die in mit dem Maschinenrahmen 2 verbundenen Führungen 13 gelagert ist. Im Bereich eines der beiden Fahrwerke 3 befinden sich zwei in Maschinenquerrichtung voneinander distanzierte Hubstempel 14, die unter Auflage auf die Schwellenoberseite zur Anhebung des Maschinenrahmens 2 ausgebildet sind.

Die in Fig.2 vergrößert dargestellte Schienenziehvorrichtung 12 zum Längsverschieben der Schienen 4 besteht aus zwei quer zur Maschinen- bzw. Schienenlängsrichtung verlaufenden, voneinander distanzierten Querjochen 15. An diesen sind jeweils ein Klemmzangen-Paar 16 bildende Klemmzangen 17 angeordnet, die jeweils um eine vertikale bzw. senkrecht zur Gleisebene verlaufende Schwenkachse 18 verschwenkbar mit dem Querjoch 15 verbunden sind. Die beiden in der Zeichnung oberen Klemmzangen 17 sind in geöffneter Stellung ersichtlich, während die unteren Klemmzangen 17 in geschlossener Stellung dargestellt sind. Jede zur Anlage an den Schienensteg verschwenkbare Klemmbacken 19 aufweisende Klemmzange 17 ist im der Schwenkachse 18 gegenüberliegenden Endbereich gelenkig mit zwei Hydraulikantrieben 20 verbunden. Die Querjoche 15 sind an der einander zugewandten Seite jeweils mit einer Zentriervorrichtung 21 verbunden, mit der die Schienen 4 für den Schweißvorgang zentrierbar sind (die Zentriervorrichtung 21 ist in US 5 136 140 näher beschrieben).

An jedem Querjoch 15 ist eine zum Erfassen der darunter befindlichen Schiene 4 vorgesehene Schienenzange 22 befestigt. Diese ist jeweils durch einen Verstellantrieb 23 in ihrer Position relativ zum Querjoch 15 - in einer normal zu einer durch die Hydraulikantriebe 20 gebildeten Ziehvorrichtungsebene 24 (Fig. 3) verlaufenden Richtung - höhenverstellbar. Jede Schienenzange 22 ist in bezug auf eine Symmetrieebene 25 symmetrisch angeordnet, die normal zur Ziehvorrichtungsebene 24 und mittig zwischen den Schwenkachsen 18 jedes Klemmzangen-Paares 16 positioniert ist.

Gemäß der in Fig. 3 und 4 ersichtlichen Darstellung befindet sich die Schienenziehvorrichtung 12 in einer von den Schwellen 5 distanzierten Arbeitsposition. Die beiden Schienenzangen 22 wurden unter Beaufschlagung des Verstellantriebes 23 relativ zur Schienenziehvorrichtung 12 abgesenkt, um beide Schienenenden 26 der Schiene 4 zu erfassen (Fig. 4) und auf die Höhe der - durch die Position der Klemmzangen 17 definierten - Ziehvorrichtungsebene 24 anzuheben (Fig. 3). Damit kommen die beiden Schienenenden 26 zwischen den Klemmzangen 17 zu liegen und werden zwischen diesen mit Hilfe der Hydraulikantriebe 20 festgeklemmt. Danach werden die Schienenzangen 22 von den Schienenenden 26 gelöst.

In weiterer Folge werden beide Schienenenden 26 durch die Hydraulikantriebe 20 auf einen zum Schweißen erforderlichen Abstand zueinander gezogen und durch das Schweißaggregat 9 miteinander verschweißt.

Alternativ zu der dargestellten Ausführung wäre es auch möglich, die Schienenzangen 22 direkt auf den Führungen 13 anzuordnen.

## Patentansprüche

1. Schweißmaschine zum Verschweißen von Schienen eines Gleises, mit einem Schweißaggregat (9), einem auf Schienenfahrwerken (3) verfahrbaren Maschinenrahmen (2) und einer Schienenziehvorrichtung (12) zum Erfassen von miteinander zu verschweißenden Schienenenden (26), mit verschwenkbar gelagerten, jeweils ein in Schienenlängsrichtung voneinander distanziertes Paar (16) bildenden Klemmzangen (17) mit zur Anlage an die Schiene (4) vorgesehenen Klemmbacken (19), wobei die beiden parallel zueinander verlaufende Schwenkachsen (18) aufweisenden Klemmzangen-Paare (16) durch Hydraulikantriebe (20) miteinander verbunden sind, und die Schienenziehvorrichtung (12) höhenverstellbar am Maschinenrahmen (2) befestigt ist, **dadurch gekennzeichnet, dass** zwei je durch einen Verstellantrieb (23) unabhängig von der Schienenziehvorrichtung (12) höhenverstellbare Schienenzangen (22) zum Erfassen und Abheben der Schienenden (26) von den Schwellen (5) vorgesehen sind.

2. Schweißmaschine nach Anspruch 1, **dadurch gekennzeichnet, dass** eine Schienenzange (22) jeweils an einem Querjoch (15) der Schienenziehvorrichtung (12) befestigt ist, die jeweils durch einen Verstellantrieb (23) in ihrer Position relativ zum Querjoch (15) - in einer durch die Position der Klemmzangen (17) gebildeten Ziehvorrichtungsebene (24) verlaufenden Richtung - verstellbar ist.

3. Schweißmaschine nach Anspruch 2, **dadurch gekennzeichnet, dass** jede Schienenzange (22) in bezug auf eine - normal zur Ziehvorrichtungsebene (24) und mittig zwischen den Schwenkachsen (18) jedes Klemmzangen-Paares (16) verlaufende - Symmetrieebene (25) symmetrisch angeordnet ist.

4. Schweißmaschine nach einem der Ansprüche 1, 2 oder 3, **dadurch gekennzeichnet, dass** eine obere Endposition der Schienenzangen (22) durch die Ziehvorrichtungsebene (24) begrenzt ist.

5. Verfahren zum Verschweißen von Schienen (4) eines Gleises (6) mit einer Schweißmaschine gemäß einem der Ansprüche 1-4, wobei die miteinander zu verschweißenden Schienenenden (26) von Schwellen (5) abgehoben, durch Klemmzangen (17) einer Schienenziehvorrichtung (12) erfasst, zueinander gezogen und verschweißt werden, **gekennzeichnet durch folgende Merkmale:**
a) die auf Schwellen (5) aufliegenden Schienenenden (26) werden **durch** Schienenzangen (22) erfasst und unter Distanzierung von den Schwellen (26) den Klemmzangen (17) der Schienenziehvorrichtung (12) zugeführt,
b) sobald die Schienenenden (26) zwischen den Klemmzangen (17) zu liegen kommen, werden die beiden Schienenenden (26) **durch** die Klemmzangen (17) festgeklemmt und die Schienenzangen (22) geöffnet.

## Claims

1. A welding machine for welding rails of a track, including a welding unit (9), a machine frame (2) mobile on on-track undercarriages (3), and a rail pulling device (12) for gripping rail ends (26) to be welded to one another, comprising pivotably mounted clamping members (17), forming respective pairs (16) spaced from one another in the longitudinal direction of the rails, having clamping jaws (19) provided for application to the rail (4), wherein the two clamping member pairs (16), having pivot axes (18) extending parallel to one another, are connected to one another by means of hydraulic drives (20), and the rail pulling device (12) is fastened for vertical adjustment to the machine frame (2), **characterized in that** two rail clamps (22), each of which is vertically adjustable by means of an adjustment drive (23) independently of the rail pulling device (12), are provided for gripping and lifting the rail ends (26) from the sleepers (5).

2. A welding machine according to claim 1, **characterized in that** a rail clamp (22) is fastened in each case to a transverse beam (15) of the rail pulling device (12), the rail clamp being adjustable in each case by means of an adjustment drive (23) in its position relative to the transverse beam (15) in a direction extending in a pulling device plane (24) formed by the position of the clamping members (17).

3. A welding machine according to claim 2, **characterized in that** each rail clamp (22) is arranged symmetrically with respect to a plane of symmetry (25) extending perpendicularly to the pulling device plane (24) and centrally between the pivot axes (18) of each clamping member pair (16).

4. A welding machine according to one of claims 1, 2 or 3, **characterized in that** an upper end position of the rail clamps (22) is delimited by the pulling device plane (12).

5. A method of welding rails (4) of a track (6) by means of a welding machine according to one of claims 1 to 4, wherein the rail ends (26) to be welded to one another are lifted from sleepers (5), gripped by clamping members (17) of a rail pulling device (12), pulled towards one another, and welded, **characterized by the following features:**
a) the rail ends (26) resting on sleepers (5) are gripped by rail clamps (22) and, with distancing from the sleepers (26), are delivered to the clamping members (17) of the rail pulling device (12),
b) as soon as the rail ends (26) come to lie between the clamping members (17), the two rail ends (26) are clamped firmly by the clamping members (17), and the rail clamps (2) are opened.

## Revendications

1. Machine à souder pour souder des rails d'une voie ferrée, avec un groupe de soudage (9), avec un bâti de machine (2) pouvant être déplacé sur des bogies (3), et avec un dispositif (12) de traction de rails pour saisir des extrémités de rails (26) à souder entre elles, doté de pinces de serrage (17) qui sont montées à pivotement, forment des paires respectives (16) de pinces mutuellement distantes dans la direction longitudinale des rails et sont pourvues de mors de serrage (19) destinés à s'appliquer contre le rail (4), sachant que les deux paires (16) de pinces de serrage, qui présentent des axes de pivotement (18) s'étendant parallèlement entre eux, sont mutuellement reliées par des entraînements hydrauliques (20) et que le dispositif (12) de traction de rails est fixé avec possibilité de réglage en hauteur sur le bâti de machine (2), **caractérisée en ce que** deux pinces pour rails (22), réglables en hauteur indépendamment du dispositif (12) de traction de rails par un entraînement de réglage (23), sont prévues pour saisir les extrémités de rails (26) et les relever à l'écart des traverses (5).

2. Machine à souder selon la revendication 1, **caractérisée en ce que** chacune des pinces pour rails (22) est fixée sur un portique transversal respectif (15) du dispositif (12) de traction de rails et peut, par un entraînement de réglage (23), être réglée dans sa position par rapport au portique transversal (15) - dans une direction perpendiculaire à un plan (24) de dispositif de traction formé par la position des pinces de serrage (17)

3. Machine à souder selon la revendication 2, **caractérisée en ce que** chacune des pinces pour rails (22) est disposée symétriquement par rapport à un plan de symétrie (25) s'étendant perpendiculairement au plan (24) de dispositif de traction et centralement entre les axes de pivotement (18) de chaque paire (16) de pinces de serrage.

4. Machine à souder selon l'une des revendications 1, 2 ou 3, **caractérisée en ce qu'**une position finale supérieure des pinces pour rails (22) est limitée par le plan (24) de dispositif de traction.

5. Procédé pour souder des rails (4) d'une voie ferrée (6) avec une machine à souder selon l'une quelconque des revendications 1 à 4, sachant que les extrémités de rails (26) à souder entre elles sont relevées à l'écart de traverses (5), saisies par des pinces de serrage (17) d'un dispositif (12) de traction de rails, tirées l'une contre l'autre et assemblées par soudage, **caractérisé par** les caractéristiques suivantes :
a) les extrémités de rails (26) reposant sur des traverses (5) sont saisies par des pinces pour rails (22) et, en les écartant des traverses (5), apportées aux pinces de serrage (17) du dispositif (12) de traction de rails,
b) dès que les extrémités de rails (26) viennent se placer entre les pinces de serrage (17), les deux extrémités de rails (26) sont bloquées par serrage par les pinces de serrage (17), et les pinces pour rails (22) sont ouvertes.
